# EUROPÄISCHE PATENTSCHRIFT

(11) **EP 2 252 779 B1**
(45) Veröffentlichungstag und Bekanntmachung des Hinweises auf die Patenterteilung: **04.11.2015**
(21) Anmeldenummer: 09707624.4
(22) Anmeldetag: 05.01.2009
(51) Int. Cl.: F01N 3/20

(54) **DOSIERVORRICHTUNG ZUR SCHADSTOFFVERMINDERUNG IN ABGASEN**
METERING DEVICE FOR POLLUTION REDUCTION IN EXHAUST GASES
DISPOSITIF DE DOSAGE POUR LA REDUCTION DES SUBSTANCES TOXIQUES DANS LES GAZ D'ECHAPPEMENT

(30) Priorität: 08.02.2008 DE 102008008564
(43) Veröffentlichungstag der Anmeldung: 24.11.2010
(73) Patentinhaber: Robert Bosch GmbH, 70442 Stuttgart (DE)
(72) Erfinder: LEONHARD, Max, 70374 Stuttgart (DE); RIEGGER, Peter, 88662 Ueberlingen (DE); MEINGAST, Ulrich, 70499 Stuttgart (DE); KLENK, Wolfgang, 74369 Loechgau (DE); BIRKHOLD, Felix, 71254 Ditzingen (DE); SCHMELING, Ulf-Peter, 71726 Benningen (DE); HOEFFKEN, Tobias, 70192 Stuttgart (DE)
(86) Internationale Anmeldenummer: PCT/EP2009/050023
(87) Internationale Veröffentlichungsnummer: WO 2009/098096

(56) Entgegenhaltungen:
- EP-A- 1 283 332
- EP-A- 1 481 719
- EP-A- 1 878 887
- DE-C1- 19 856 366
- JP-A- 61 116 013
- JP-A- 2007 000 783

## Beschreibung

### Stand der Technik

Die Erfindung geht aus von bekannten Verfahren und Vorrichtungen zur Nachbehandlung von Abgasen, insbesondere von Abgasen von Brennkraftmaschinen, beispielsweise im Automobilbereich, in der Energieerzeugung oder in ähnlichen Bereichen der Naturwissenschaft und Technik.

Aus derartigen Bereichen sind Techniken bekannt, bei welchen schadstoffvermindernde Medien, insbesondere fluide Medien (beispielsweise Flüssigkeiten oder Gase), in das Abgas eindosiert, beispielsweise eingesprüht, werden. Dabei werden unterschiedliche Techniken und unterschiedliche Arten von Medien eingesetzt, welche beispielsweise in DE 10 2004 004 738 A1 beschrieben sind. Ein wesentliches Anwendungsbeispiel, auf welches die vorliegende Erfindung jedoch nicht beschränkt ist, ist das Einsprühen einer Harnstoff-Wasser-Lösung in das Abgas von Dieselmotoren, um den Anteil der Stickoxide (NOₓ) im Abgas zu vermindern. Dabei wird in einer Reduktionsreaktion das NOₓ unter Bildung von Stickstoff und Wasser zu N₂O reduziert. Auch andere Reduktionsmittel und/oder Reduktionsmittel-Vorläufer (welche sich beispielsweise erst im Abgas oder im Bereich des Abgases zum Reduktionsmittel umsetzen) sind bekannt. Derartige Verfahren werden oft auch als SCR-Verfahren (SCR: selective catalytic reduction) bezeichnet. Durch die selektive katalytische Reduktion werden beispielsweise Stickoxide mit hoher Selektivität zu Stickstoff reduziert, wodurch die Stickoxidkonzentration im Abgas deutlich verringert werden kann. Harnstoff-Wasser-Lösungen als Beispiele für Reduktionsmittel sind beispielsweise unter dem Markennamen "AdBlue" erhältlich. Durch thermische Zersetzung des Harnstoffs entsteht aus dem Harnstoff als Reduktionsmittel-Vorläufer das eigentliche Reduktionsmittel, nämlich gasförmiges Ammoniak.

Neben Verfahren und Vorrichtungen, welche auf der Verwendung von Reduktionsmitteln oder Reduktionsmittel-Vorläufern als schadstoffvermindernde Medien basieren, sind auch andere Arten von schadstoffvermindernden Medien bekannt. So wird beispielsweise, ebenfalls in DE 10 2004 004 738 A1, die nachmotorische Erwärmung von Abgas durch Einspritzen von Kraftstoff in den Abgasstrang beschrieben, wodurch die zur Regeneration von nachgeschalteten Katalysatoren oder Dieselpartikelfiltern erforderlichen Abgastemperaturen erreicht werden. Hierbei handelt es sich also um ein Beispiel eines "indirekt" schadstoffvermindernden Mediums, dessen Einbringung in das Abgas jedoch ebenfalls allgemein dem Zweck der kurzfristigen, mittelfristigen oder langfristigen Schadstoffverminderung dient. Zahlreiche andere Ausführungsbeispiele schadstoffvermindernder Medien sind bekannt.

Bei bekannten Dosiervorrichtungen, wie beispielsweise der DE 10 2004 004 738 A1, wird in der Regel ein Dosiermodul verwendet, welches beispielsweise ein Dosierventil zum Erzeugen eines Sprays, eines Strahls, eines Nebels oder einer anderen Art von Strahl oder Wolke des schadstoffvermindernden Mediums enthält. Das Dosiermodul kann beispielsweise mit einem entsprechenden Tank zur Aufnahme des schadstoffvermindernden Mediums verbunden sein, wobei sinngemäß auch mehrere schadstoffvermindernde Medien in Kombination oder sequenziell verwendet werden können.

Eine Problematik besteht dabei in vielen Fällen darin, das schadstoffvermindernde Medium möglichst optimal mit dem Abgas, welches durch ein Strömungsrohr (beispielsweise einen Teil eines Abgasstrangs einer Brennkraftmaschine) strömt, zu vermischen. In DE 10 2004 004 738 A1 wird das Dosiermodul unmittelbar in das Strömungsrohr eingebracht, wobei der Strahl des schadstoffvermindernden Mediums, um eine bessere Verteilung im Abgas zu erzielen, auf ein Prallblech gesprüht wird. Zusätzlich kann noch ein Mischer in dem Strömungsrohr vorgesehen sein.

Die in DE 10 2004 004 738 A1 beschriebene Durchmischung kann weiter dadurch verbessert werden, dass das Dosiermodul, beispielsweise ein Dosierventil des Dosiermoduls, mit einem Stutzen, beispielsweise einem trichterähnlichen Stutzen, mit dem Strömungsrohr verbunden wird. Dieser Stutzen kann beispielsweise an dem Strömungsrohr angebracht werden oder unmittelbar in das Strömungsrohr integriert werden, beispielsweise in einem Strömungsrohrsegment des Strömungsrohrs. Ein Beispiel einer derartigen Anordnung mit einem Stutzen ist in DE 10 2005 063 081 A1 offenbart. Der Stutzen wird beispielsweise unter einem Winkel von 20 bis 60° relativ zu dem Strömungsrohr geneigt, so dass ein zugeführter Sprühnebel unter einem flachen Winkel zur Strömungsrichtung des Abgases in das Strömungsrohr eintritt. Der Stutzen kann beispielsweise zylinderförmig, konisch oder trichterförmig ausgestaltet sein, beispielsweise mit einer sich hin zum Strömungsrohr verbreiternden Öffnung. Die DE 10 2005 063 081 A1 schlägt weiterhin optional die Verwendung von Oberflächenverdampfern und statischen Mischern zur verbesserten Durchmischung des schadstoffvermindernden Mediums mit dem Abgas vor.

Die aus dem Stand der Technik bekannten Dosiervorrichtungen lassen jedoch Raum für weitere Verbesserungen hinsichtlich der Durchmischung des schadstoffvermindernden Mediums mit dem Abgas. So bildet sich beispielsweise in DE 10 2005 063 081 A1 durch das am trichterförmigen Stutzen vorbeiströmende Abgas innerhalb des Stutzens eine zirkulierende Strömung mit Wirbeln aus. Der Gasaustausch zwischen dem Stutzen und dem Abgas ist dabei jedoch gering. Unter bestimmten Randbedingungen kann es zudem im Stutzen und/oder am Dosiermodul zur Bildung von Ablagerungen kommen. Durch derartige Ablagerungen beispielsweise am Dosierventil des Dosiermoduls kann die Sprayaufbereitung beeinträchtigt werden, und es kann teilweise zu Beeinträchtigungen der Funktion des Dosiersystems kommen.

Das Spray des eindosierten schadstoffvermindernden Mediums sollte einen möglichst hohen Verdampfungsgrad und eine möglichst hohe Gleichverteilung erreichen. Die Zurückversetzung des Dosiermoduls durch Verwendung eines zusätzlichen Stutzens schützt zwar das Dosiermodul vor einer direkten Wärmeeinbringung durch das Abgas. Nachteilig an der Verwendung des zurückgesetzten Stutzens ist es jedoch, dass feine Tropfen durch die Sekundärströmung im Stutzen abgelenkt werden können und beispielsweise auch an den kälteren Wänden des Stutzens abgeschieden werden können. So können sich beispielsweise unerwünschte Nebenprodukte an den Stutzenwänden ausbilden. Beispielsweise kann sich aus abgeschiedenem AdBlue kristalliner Harnstoff bilden, bei heißeren Betriebspunkten auch Folgeprodukte.

Die DE 198 56 366 beschreibt eine Anordnung zur Nachbehandlung von Abgasen einer Brennkraftmaschine, bei der ein an der Abgasleitung angeordnetes Einspritzventil mit Luft umspült wird.

### Offenbarung der Erfindung

Es wird daher eine Dosiervorrichtung zum Einbringen eines schadstoffvermindernden Mediums in ein durch ein Strömungsrohr, insbesondere eines Abgasstrangs einer Brennkraftmaschine, strömendes Abgas vorgeschlagen, welches die Nachteile bekannter Dosiervorrichtungen zumindest weitgehend vermeidet.

Die Dosiervorrichtung umfasst ein Dosiermodul zum Dosieren des schadstoffvermindernden Mediums. Für die Ausgestaltung des Dosiermoduls und des schadstoffvermindernden Mediums, wobei es sich beispielsweise um ein festes und/oder flüssiges und/oder gasförmiges Medium oder um eine Kombination verschiedener Medien handeln kann, kann weitgehend auf den oben beschriebenen Stand der Technik, insbesondere die DE 10 2005 063 081 A1 und die DE 10 2004 004 738 A1 verwiesen werden. Die Dosiervorrichtung kann als montierbares Teil ausgestaltet sein, welches an dem Strömungsrohr montiert werden kann, oder kann das Strömungsrohr oder ein Strömungsrohrsegment umfassen, beispielsweise ähnlich zur Ausgestaltung in der DE 10 2005 063 081 A1. Die Dosiervorrichtung umfasst ein Dosiermodul und einen das Dosiermodul und das Strömungsrohr verbindenden Stutzen. Daneben kann die Dosiervorrichtung weitere Elemente umfassen. In der folgenden Beschreibung wird, ohne Beschränkung weiterer möglicher Ausgestaltungen des schadstoffvermindernden Mediums, davon ausgegangen, dass es sich bei dem schadstoffvermindernden Medium um ein flüssiges oder gasförmiges Medium handelt, insbesondere um ein flüssiges oder gasförmiges Reduktionsmittel und/oder einen Reduktionsmittel-Vorläufer, wie beispielsweise AdBlue.

Zur Optimierung des Gasaustausches zwischen dem Stutzen und dem Abgas und der Verminderung der Bildung von Ablagerungen wurden Untersuchungen durchgeführt und dabei als Ursache der genannten Problematiken vor allem folgende Effekte identifiziert:
- Umlenkung und Ablagerung kleinster Tropfen durch induzierte Wirbel in dem Stutzen
- Kondensation von schadstoffverminderndem Medium oder Folgeprodukten aus der Gasphase, insbesondere an den Stutzenwänden
- Tropfen mit sehr großen Austrittswinkeln aus dem Dosiermodul, insbesondere einem Dosierventil des Dosiermoduls, treffen direkt auf einen Flansch der Dosiervorrichtung
- flüssiges schadstoffverminderndes Medium setzt sich an einer Düsenspitze des Dosiermoduls beim Öffnen und Schließen eines Dosierventils fest.

Unter Berücksichtigung dieser Erkenntnis besteht ein wesentlicher Gedanke der vorliegenden Erfindung darin, den Stutzen, welcher das Dosiermodul und das Strömungsrohr verbindet (wobei sinngemäß auch mehrere Stutzen vorgesehen sein können), durch ein Hilfsfluid zu spülen. Eine derartige Spülung kann eine verbesserte Durchmischung und eine Verminderung von Ablagerungen an der Stutzenwand bedingen. Durch die Spülung wird beispielsweise die Ausbildung eines Wirbels im Stutzen unterdrückt und das schadstoffvermindernde Medium, insbesondere das flüssige und/oder gasförmige Reduktionsmittel oder der Reduktionsmittel-Vorläufer, rasch aus dem Stutzen abgeführt. Die Wahrscheinlichkeit der Ablagerung von flüssigem oder gasförmigem Reduktionsmittel an der Wand des Stutzens und somit die Wahrscheinlichkeit der Bildung von Ablagerungsprodukten werden somit vermindert.

Dementsprechend wird vorgeschlagen, dass die Dosiervorrichtung eine Spülvorrichtung aufweist, welche eingerichtet ist, um einen den Stutzen zumindest teilweise in Richtung des Strömungsrohres durchströmenden Hilfsstrom des Hilfsfluids zu erzeugen. Unter einem "Hilfsfluid" können dabei ein oder mehrere Fluide, das heißt gasförmige und/oder flüssige Medien verstanden werden. Insbesondere kann als Hilfsfluid das Abgas selbst verwendet werden, also ein Teil des Abgases, welcher beispielsweise vom Hauptstrom des Abgases abgezweigt wird. Alternativ oder zusätzlich können als Hilfsfluid jedoch auch von dem Abgas verschiedene Trägermedien verwendet werden, beispielsweise Druckluft, Stickstoff, Frischluft oder ähnliches. Wird ein Teil des Abgases abgezweigt und als Hilfsfluid verwendet, so kann dieser Teil des Abgases beispielsweise aus einem Hochdruckteil des Abgasstrangs abgeführt werden. Alternativ oder zusätzlich kann auch Abgas aus dem Strömungsrohr selbst verwendet werden, beispielsweise Abgas, welches vor der Einmündung des Stutzens der Dosiervorrichtung abgeführt wird. Verschiedene andere Alternativen oder Kombinationen sind denkbar. Dabei sollte die Spülung durch die Spülvorrichtung insbesondere derart erfolgen, dass der Hilfsstrom des Hilfsfluids die Quergeschwindigkeiten des schadstoffvermindernden Mediums im Stutzen verringert.

Das Hilfsfluid wird hierbei dem Stutzen über mindestens eine Spülleitung zugeführt. Diese Spülleitung kann insbesondere im oberen Bereich des Stutzens, also im Bereich des Stutzens, welcher von der Mündung des Stutzens in das Strömungsrohr entfernt angeordnet ist, beispielsweise im ersten Drittel oder ersten Viertel des Stutzens, angeordnet sein. Anstelle einer einzelnen Einmündung der Spülleitung können auch eine Mehrzahl von Einmündungen vorgesehen sein.

Der Stutzen weist eine Innenschale auf, wobei die Spülleitung zumindest teilweise in einem Zwischenraum zwischen dem Stutzen und der Innenschale aufgenommen ist und/oder zumindest teilweise durch den Zwischenraum zwischen dem Stutzen und der Innenschale gebildet wird. Die Innenschale kann beispielsweise zylinderförmig oder konisch ausgebildet sein und in den Stutzen eingebracht werden. Unter einer Innenschale ist dabei ein Element zu verstehen, welches die Innenwand des Stutzens zumindest teilweise, vorzugsweise vollständig, abdeckt. Insbesondere kann es sich hierbei um ein konisches oder zylinderförmiges Schalenelement oder ein Segment eines derartigen Schalenelements handeln. Eine segmentförmig ausgestaltete Innenschale kann auch beispielsweise, wie unten aufgeführt, eine "Prallwand" umfassen, welche lediglich einen Teil der Innenwand des Stutzens abdeckt.

Die Verwendung mindestens einer Innenschale bietet weiterhin den Vorteil, dass die Wandtemperatur in dem von dem schadstoffvermindernden Medium durchströmten Bereich bei Beibehaltung der thermischen Einsatzgrenze des Dosiermoduls und/oder der gesamten Dosiervorrichtung erhöht werden kann. So kann die Innenschale beispielsweise (zum Beispiel durch Verwendung entsprechender Isolierungen und/oder Montagen und/oder stoffschlüssigen, kraftschlüssigen oder formschlüssigen Verbindungen) zumindest teilweise von dem restlichen Stutzen thermisch entkoppelt sein. Dabei kann die Innenschale vorzugsweise derart ausgestaltet sein, dass das schadstoffvermindernde Medium vollständig oder zumindest überwiegend durch das Innere der Innenschale (das heißt nicht durch den Zwischenraum zwischen Innenschale und Stutzen) strömt. Die Innenschale dient somit gleichzeitig auch der Strömungsführung des schadstoffvermindernden Mediums. Gleichzeitig schafft die Innenschale einen thermisch getrennten Bereich zwischen dem eigentlichen Stutzen, welcher mit dem Dosiermodul verbunden ist und welcher somit keiner extremen thermischen Belastung ausgesetzt sein sollte, und dem vom schadstoffvermindernden Medium durchströmten Innenbereich, welcher zur Verminderung von Ablagerungen möglichst hoch temperiert sein sollte. Auf diese Weise wird durch Verwendung der Innenschale das Risiko der Ablagerungsbildung verringert. Die Verwendung der Innenschale bietet sich also auch in dem Fall an, in welchem der Zwischenraum zwischen dem Stutzen und der Innenschale nicht zur Aufnahme der Spülleitung genutzt wird.

Die Spülleitung kann beispielsweise zumindest teilweise separat von dem Stutzen ausgebildet sein, also beispielsweise ein Spülleitungsrohr umfassen, welches getrennt von dem Stutzen ausgebildet ist und an einer Mündungsstelle in den Stutzen mündet.

Alternativ oder zusätzlich kann die Spülleitung jedoch auch ganz oder teilweise in dem Stutzen integriert sein.

Die Innenschale kann insbesondere an der stromaufwärtigen Seite des Stutzens, das heißt stromaufwärts hinsichtlich der Hauptströmungsrichtung des Abgases in dem Strömungsrohr bezüglich der Mündung des Stutzens in das Strömungsrohr, in das Strömungsrohr hineinragen. Auf diese Weise kann beispielsweise eine Verwirbelung an der Mündung des Stutzens erfolgen und/oder es kann ein Teil des Abgases in einen Zwischenraum zwischen dem Stutzen und der Innenschale abgelenkt werden, um als Hilfsfluid zu fungieren. In der Nähe des Dosiermoduls kann die Innenschale Öffnungen aufweisen, durch welche der Zwischenraum mit dem Innenraum der Innenschale verbunden ist, so dass das Hilfsfluid in das Innere der Innenschale eindringen und dort wiederum zum Strömungsrohr zurückströmen kann. In einer Weiterentwicklung kann das Dosiermodul mit einem Rohr oder einem Ansatz verbunden sein, wobei das Rohr oder der Ansatz in den Stutzen hineinragen. Im Bereich der Mündung des Rohres oder Ansatzes in den Stutzen kann der Zwischenraum die besagte Öffnung aufweisen, so dass das Hilfsfluid aus dem Zwischenraum in das Innere der Innenschale einströmen und sich dort mit dem schadstoffvermindernden Medium vermischen kann. Anschließend können die Mischungen aus schadstoffverminderndem Medium und Hilfsfluid in Richtung des Strömungsrohres strömen.

Die Innenschale kann allgemein auch Teil eines doppelwandigen Rohrs sein. Dies bedeutet beispielsweise, dass die Innenschale nicht nur den Stutzen des Dosiermoduls ganz oder teilweise ausfüllen kann, sondern auch einen Teil des Abgasrohrs. So kann beispielsweise die Innenschale in das Strömungsrohr hineinragen und das Strömungsrohr zumindest in einem Abschnitt des Strömungsrohres zumindest partiell auskleiden. Zwischen der Innenschale und dem Strömungsrohr kann dann zumindest in mindestens einem Bereich der bzw. ein Zwischenraum ausgebildet sein. Die Innenschale kann dann beispielsweise durch mindestens einen Flansch und/oder durch mindestens eine umlaufende Befestigung mit dem als Außenschale fungierenden Strömungsrohr bzw. Abgasrohr verbunden sein.

Weiterhin kann im Bereich des Zwischenraumes, in welchem ein doppelwandiges Rohr mit der Innenschale ausgebildet ist, ein Wärmeübertrag auf die Außenschale des doppelwandigen Rohres verbessert werden. So kann beispielsweise das Außenrohr dort, wo es die Innenschale überdeckt, auf der Innen- oder der Außenseite mit Rippen oder Noppen zur Verbesserung des Wärmeübergangs versehen werden. Beispielsweise können der Stutzen und/oder das Strömungsrohr in dem Bereich des Zwischenraums zumindest teilweise mit derartigen Rippen und/oder Noppen zur Verbesserung eines Wärmeübertrags auf den Stutzen und/oder das Strömungsrohr versehen sein. So können die Temperatur des durchströmenden Abgases bzw. Spülgases weiter gesenkt werden und eine Überhitzung des Dosierventils vermieden werden.

Wie oben beschrieben, kann als Hilfsfluid insbesondere das Abgas selbst eingesetzt werden. In diesem Fall kann beispielsweise die Spülleitung mit dem Strömungsrohr verbunden sein und einen Einlauf hin zum Strömungsrohr ausbilden. Die Spülleitung kann dabei getrennt von dem Stutzen ausgebildet sein und/oder auch ganz oder teilweise mit dem Stutzen verbunden oder in diesen integriert sein. Abgas kann in die Spülleitung eindringen und von dem Einlauf durch die Spülleitung hin zu einer Mündungsstelle innerhalb des Stutzens strömen. Wie oben beschrieben, ist diese Mündungsstelle vorzugsweise im Bereich der Verbindung zwischen dem Dosiermodul und dem Stutzen angeordnet, beispielsweise im ersten Drittel oder im ersten Viertel des Stutzens. Besonders bevorzugt ist es dabei, wenn der Einlauf der Spülleitung derart ausgestaltet ist, dass sich in diesem Bereich ein Staudruck in dem Abgas ausbildet. Dieser Staudruck kann als "treibende Kraft" für das Einströmen des Abgases als Hilfsfluid in die Spülleitung und anschließend in den Stutzen dienen.

Weiterhin kann es von Vorteil sein, wenn in der Spülleitung mindestens ein Ventil zur Steuerung des Zustroms des Hilfsfluids aufgenommen ist. Auf diese Weise kann beispielsweise mittels des Ventils der Zustrom des Hilfsfluids angepasst werden. Beispielsweise kann die Dosiervorrichtung zusätzlich mindestens eine elektrische Steuerung zur Ansteuerung des mindestens einen Ventils aufweisen. Diese elektronische Steuerung kann beispielsweise ganz oder teilweise identisch mit einer Motorsteuerung eines Verbrennungsmotors sein. Alternativ oder zusätzlich können auch getrennte elektronische Steuerungen verwendet werden. Die elektronische Steuerung kann beispielsweise mindestens einen Mikrocomputer umfassen. Auch andere Arten der Ausgestaltung der elektronischen Steuerung sind jedoch denkbar. Insbesondere kann die Steuerung derart ausgestaltet sein, dass diese das Ventil getaktet ansteuert. Alternativ oder zusätzlich kann die Ansteuerung des Ventils auch an Betriebszustände einer Brennkraftmaschine angepasst werden. Beispielsweise kann, wie oben beschrieben, ein Regenerationsbetrieb mindestens eines Katalysators vorgesehen sein, in welchem der Zustrom von Hilfsfluid und/oder von schadstoffverminderndem Medium angepasst werden muss. Beispielsweise kann dies zu einer Kraftstoffeinspritzung in den Abgasstrang genutzt werden, um einen Partikelfilter zu regenerieren. Die Steuerung zur Steuerung des Ventils kann auch mit einer Steuerung des gesamten Dosiermoduls verbunden sein, insbesondere ganz oder teilweise identisch mit einer derartigen Steuerung der Dosiervorrichtung sein, so dass insbesondere beispielsweise eine Steuerung eines Dosierventils der Dosiervorrichtung mit der Steuerung des mindestens einen Ventils synchronisiert und/oder gekoppelt werden kann.

### Kurze Beschreibung der Zeichnungen

Ausführungsbeispiele der Erfindung sind in den Zeichnungen dargestellt und in der nachfolgenden Beschreibung näher erläutert.

Es zeigen
- Figur 1: eine dem Stand der Technik entsprechende Dosiervorrichtung;
- Figur 2: eine Dosiervorrichtung mit einer separaten Spülleitung;
- Figur 3: eine Dosiervorrichtung mit einer teilweise in einen Stutzen integrierten Spülleitung;
- Figur 4: eine Dosiervorrichtung mit einer Spülvorrichtung mit einem separaten Trägermedium als Hilfsfluid;
- Figur 5: eine gegenüber Figur 3 modifizierte Ausführungsform einer erfindungsgemäßen Dosiervorrichtung; und
- Figur 6: eine weitere Modifikation der Dosiervorrichtungen gemäß den Figuren 3 und 5.

### Ausführungsformen

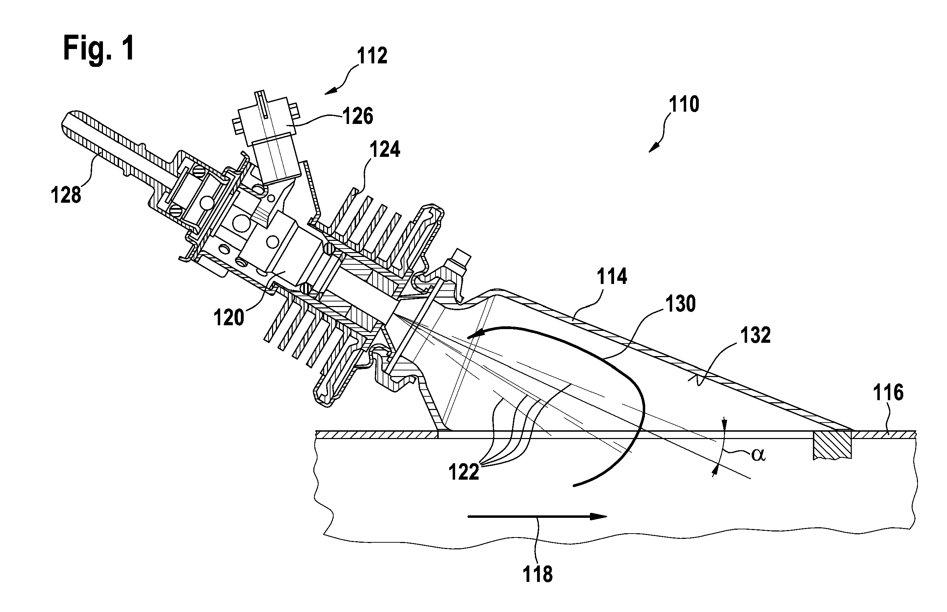

In Figur 1 ist eine dem Stand der Technik entsprechende Dosiervorrichtung 110 schematisch dargestellt. Beispielsweise kann diese Dosiervorrichtung zumindest näherungsweise der Dosiervorrichtung gemäß der DE 10 2005 063 081 A1 entsprechen.

Die Dosiervorrichtung 110 weist ein Dosiermodul 112 auf, welches über einen als zurückgezogener Stutzen ausgebildeten Stutzen 114 mit einem Strömungsrohr 116 verbunden ist. Das Strömungsrohr 116 kann Bestandteil der Dosiervorrichtung 110 sein oder kann separat von der Dosiervorrichtung 110 ausgebildet sein. Wie in DE 10 2005 063 081 A1 dargestellt, kann die Dosiervorrichtung 110 beispielsweise in ein Segment des Strömungsrohrs 116 integriert sein oder kann auf das Strömungsrohr 116 aufmontiert werden. Durch das Strömungsrohr 116 strömt ein Abgas mit einer Hauptströmungsrichtung 118. Die Dosiervorrichtung 110 und der Stutzen 114 sind unter einem Winkel α (Winkel zwischen der Haupt-Einspritzrichtung und der Hauptströmungsrichtung 118) zum Strömungsrohr 116 angeordnet. Dieser Winkel kann, wie oben beschrieben, beispielsweise zwischen 20 und 60° liegen, kann jedoch auch in einem anderen Bereich liegen, beispielsweise zwischen 20° und 85°, insbesondere zwischen 30° und 70°.

Das Dosiermodul 112 weist ein Dosierventil 120 auf, welches für ein Einsprühen oder Einspritzen eines schadstoffvermindernden Mediums 122 in das Abgas sorgt. Das Dosierventil 120 ist in einem Kühlkörper angebracht, welcher eine Mehrzahl von Kühlrippen 124 aufweist. Durch diese Kühlrippen 124 wird Wärme, welche durch das Abgas in das Dosierventil 120 eingetragen wird, an die Umgebung abgeführt und so die Temperatur des Dosierventils 120 gesenkt. Das Dosiermodul 112 weist einen elektrischen Stecker 126 zur Ansteuerung des Dosierventils 120 und einen Zulauf 128 zur Zuführung des schadstoffvermindernden Mediums 122 zum Dosierventil 120 auf. Für weitere Einzelheiten möglicher Ausgestaltungen des Dosiermoduls 112 und der gesamten Dosiervorrichtung 110 kann auf die Beschreibung des Standes der Technik, beispielsweise in DE 10 2005 063 081 A1, verwiesen werden.

Bei der in Figur 1 dargestellten Ausgestaltung der Dosiervorrichtung 110 gemäß dem Stand der Technik mit dem zurückgezogenen Stutzen 114 wird durch das Vorbeiströmen des Abgases an dem Stutzen 114 eine Sekundärströmung 130 erzeugt bzw. induziert. Diese Sekundärströmung 130 führt zu einer Wirbelbildung im Inneren des Stutzens 114. Die Sekundärströmung 130 weist somit eine Querkomponente zum Spray des schadstoffvermindernden Mediums 122 auf, welches im Fall eines fluiden beziehungsweise flüssigen schadstoffvermindernden Mediums beispielsweise zum Austreiben kleiner Tropfen mit Durchmessern von beispielsweise kleiner als 20 µm führen kann. Diese Tropfen können zur Abscheidung eines Films des schadstoffvermindernden Mediums an der im Vergleich zum Abgas kühleren Innenwand 132 des Stutzens 114 führen. Weiterhin kann die hohe Verweilzeit und Konzentration von gasförmigem schadstoffverminderndem Medium 122 zu Kondensation an der Innenwand des Stutzens 114 führen.

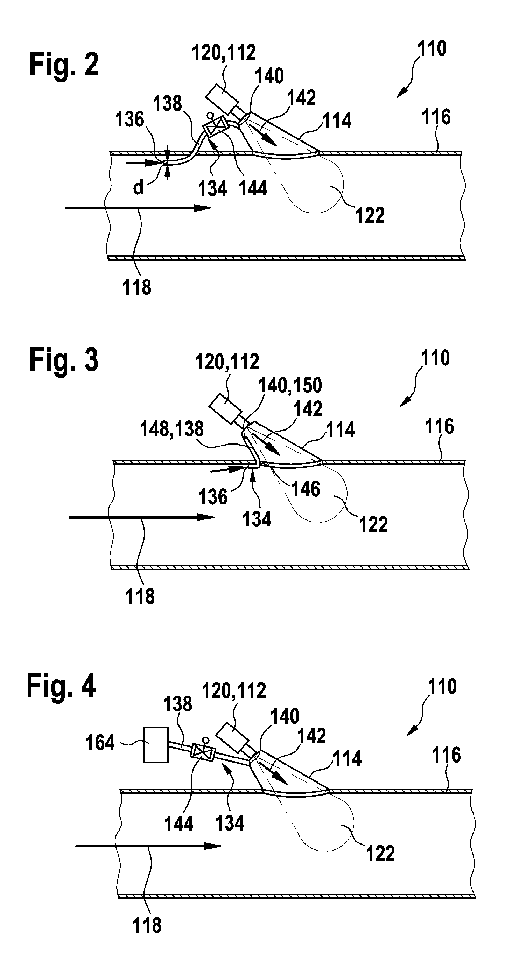

In den Figuren 2 bis 6 sind hingegen Weiterbildungen der Dosiervorrichtung 110, beispielsweise der Dosiervorrichtung 110 gemäß Figur 1, dargestellt. Für die meisten Komponenten dieser Dosiervorrichtungen 110 gemäß der Erfindung kann auf die Beschreibung der Dosiervorrichtung 110 in Figur 1 verwiesen werden. Auch andere Ausgestaltungen der Dosiervorrichtung 110 sind jedoch möglich.

Im Gegensatz zu der in Figur 1 gezeigten, dem Stand der Technik entsprechenden Ausführung der Dosiervorrichtung 110 weist die erfindungsgemäße Dosiervorrichtung 110 gemäß den Figuren 2 bis 6 eine Spülvorrichtung 134 zur Spülung des Stutzens 114 mit einem Hilfsfluid auf. Dabei zeigen die Ausführungsbeispiele in den Figuren 2, 3, 5 und 6 Ausführungsformen, bei welchen als Hilfsfluid das Abgas oder ein Teil des Abgases selbst verwendet wird, wohingegen Figur 4 ein Ausführungsbeispiel zeigt, bei welchem ein separates Trägermedium (beispielsweise Druckluft) als Hilfsfluid verwendet wird.

Bei der Dosiervorrichtung 110 in Figur 2 wird ein Teil des Abgasmassenstroms aus dem Strömungsrohr 116 über einen Einlauf 136 in eine Spülleitung 138 eingeleitet und über diese Spülleitung 138 zu einer Mündungsstelle 140 im oberen Bereich des Stutzens 114 geführt. Die Spülleitung 138 ist dabei in weiten Teilen separat von dem Stutzen 114 ausgebildet. Der Einlauf ist stromaufwärts des Stutzens 114 in dem Strömungsrohr 116 angeordnet und derart ausgebildet, dass sich im Bereich des Einlaufs 136 ein Staudruck des Abgases vor dem Einlauf 136 bildet.

Durch Einleiten des Abgases als Hilfsfluid in den Stutzen bildet sich innerhalb des Stutzens 114 eine konvektive Strömung 142 innerhalb des Stutzens 114 aus. Diese konvektive Strömung 142 ist lediglich ein Beispiel eines Hilfsstroms des Hilfsfluids, welcher grundsätzlich auch anders ausgestaltet sein kann, beispielsweise als laminarer oder turbulenter Strom oder als Strom mit verschiedenen Strömungsschichten, wobei jedoch stets insgesamt ein Massentransport des Hilfsfluids hin zum Strömungsrohr 116 erfolgen soll. Das schadstoffreduzierende Medium 122 tritt aus dem Dosierventil 120 aus und wird, sei es beispielsweise in flüssiger und/oder in gasförmiger Form, durch die konvektive Strömung 142 rasch aus dem Stutzen 114 abtransportiert.

Der Massenstrom in der Spülleitung 138 kann über deren Durchmesser d sowie die Ausformung des Einlaufs 136 für den jeweiligen Massenstrombereich des Abgases, beispielsweise des Abgases einer Brennkraftmaschine, so ausgelegt werden, dass eine einwandfreie Funktion der Spülung sichergestellt ist. Hierbei ist es vorteilhaft, den Staudruck des Abgases im Bereich des Einlaufs 136 auszunutzen. Neben einer kontinuierlichen Spülung ist beispielsweise auch eine getaktete Spülung denkbar, um den Eintrag von Wärme in die Dosiervorrichtung 110 zu minimieren. Hierfür kann ein zusätzliches Ventil 144 in der Spülleitung 138 vorgesehen sein, welches in Figur 2 angedeutet ist. Dieses Ventil 144 kann beispielsweise mit einer Steuerung (in Figur 2 nicht dargestellt) verbunden sein. Diese Steuerung kann beispielsweise eine Steuerung sein, welche auch die Dosiervorrichtung 110 beziehungsweise das Dosiermodul 112 ansteuert und welche beispielsweise mit dem in Figur 1 dargestellten Stecker 126 verbunden sein kann.

In Figur 2 ist die Spülvorrichtung 134 derart ausgebildet, dass deren Spülleitung 138 getrennt von dem Stutzen 114 ausgebildet ist. Dass dies nicht notwendigerweise der Fall sein muss, sondern dass es vorteilhaft sein kann, die Spülleitung 138 ganz oder teilweise mit dem Stutzen 114 zu integrieren, ist beispielhaft in den Ausführungsbeispielen gemäß den Figuren 3, 5 und 6 dargestellt. So weist bei dem Ausführungsbeispiel der Dosiervorrichtung 110 gemäß Figur 3 die Spülvorrichtung 134 auf der stromaufwärtigen Seite des Stutzens 114 innerhalb des Stutzens 114 eine Prallwand 146 auf. Diese Prallwand 146 ist gekrümmt ausgebildet und ragt in das Strömungsrohr 116 hinein. Zwischen der Prallwand 146 und der Wand des Strömungsrohrs 114 bildet sich ein Zwischenraum 148 aus, welcher als Spülleitung 138 dient. Am unteren Ende der Prallwand 146 ist eine Öffnung innerhalb des Strömungsrohrs 116 angeordnet, welche den Einlauf 136 zur Spülleitung 138 darstellt. An ihrem oberen Ende weist die Prallwand 146 eine Öffnung 150 auf, durch welche das in den Zwischenraum 148 eingeströmte Abgas ins Innere des Stutzens 114 einströmen kann, um dort die konvektive Strömung 142 auszubilden. Diese Öffnung 150 bildet somit gleichzeitig die Mündungsstelle 140 der Spülleitung 138 aus.

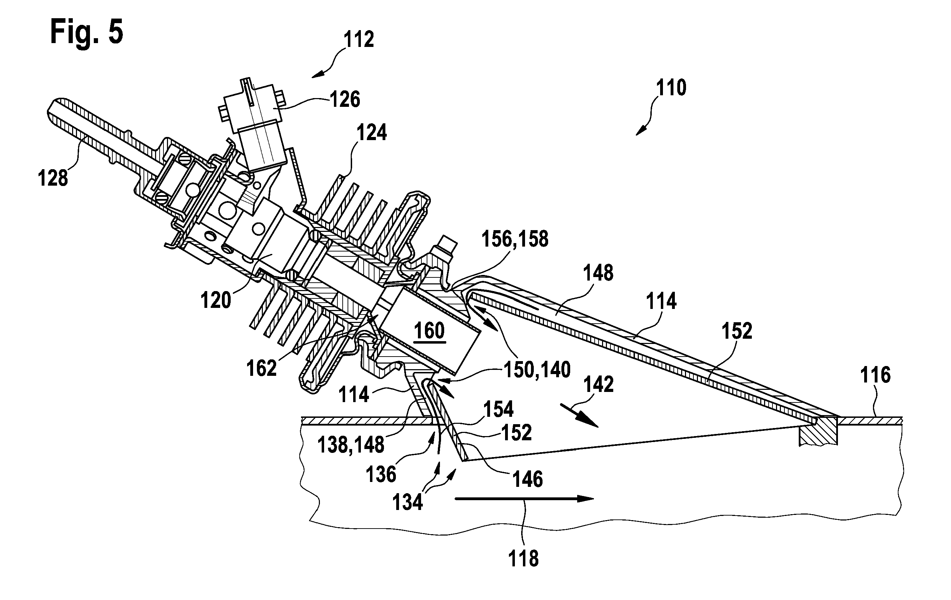

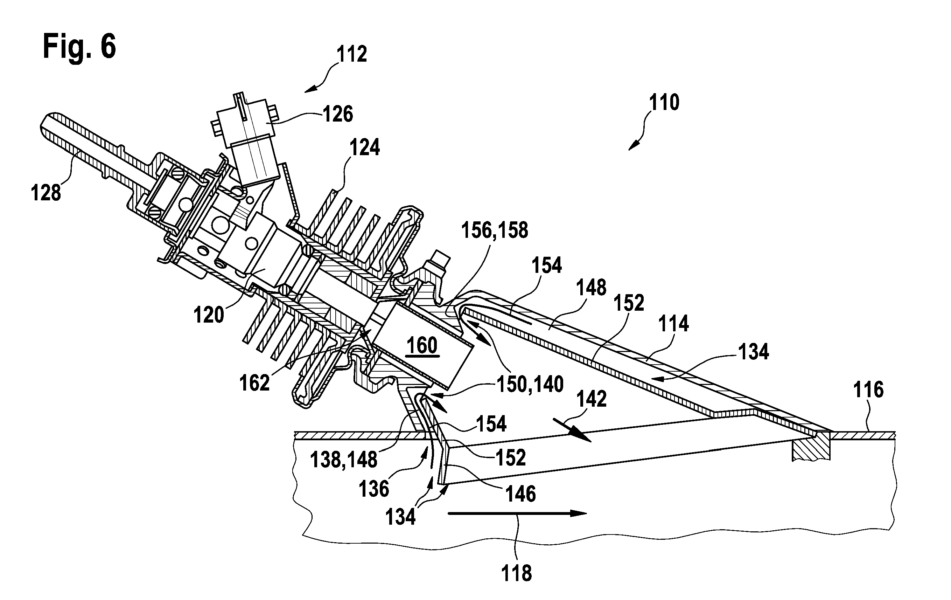

Bei dem Ausführungsbeispiel der Dosiervorrichtung 110 gemäß Figur 3 ist die Spülleitung 138 durch den Zwischenraum 148 zwischen der Prallwand 146 und dem Stutzen 114 ausgebildet. In Erweiterung dieses Prinzips kann die anströmseitige Prallwand 146 als spezielles Beispiel einer Innenschale 152 ausgedehnt werden zu einer vollständig umlaufenden Innenschale 152, welche in dem Stutzen 114 aufgenommen ist. Zwei Ausführungsbeispiele einer Dosiervorrichtung 110 mit einer derartigen Innenschale 152 sind in den Figuren 5 und 6 dargestellt. Dabei weist in den dargestellten Ausführungsbeispielen die Innenschale 152, wie auch der Stutzen 114, eine konische, trichterförmige Gestalt auf, so dass der (in den Figuren 5 und 6 nicht dargestellte) Strahl des schadstoffvermindernden Mediums 152 innerhalb des Stutzens 114 vollständig im Inneren der Innenschale 152 verläuft. Auch andere Gestalten sind jedoch möglich, beispielsweise zylinderförmige Ausgestaltungen und/oder Ausführungen mit einem nicht-runden Querschnitt der Innenschale 152, beispielsweise mit ovalem oder polygonalem Querschnitt, beispielsweise rechteckigem und/oder quadratischem Querschnitt.

Dabei ist die Innenschale 152 in den dargestellten Ausführungsbeispielen derart ausgestaltet, dass diese am stromaufwärtigen Ende in das strömende Abgas im Strömungsrohr 116 hineinragt. Die Vorderkante der Innenschale 152 bildet somit wiederum, ähnlich zur Ausgestaltung in Figur 3, eine Prallwand 146. Zwischen der Prallwand 146 und der Wand des Strömungsrohrs 116 ist im Bereich der Vorderkante wiederum ein Einlauf 136 ausgebildet, durch welchen Abgas als Hilfsfluid 154 in den als Spülleitung 138 wirkenden Zwischenraum 148 zwischen Innenschale 152 und Stutzen 114 einströmen kann. Am oberen Ende der Innenschale 152 ist mindestens eine, beispielsweise umlaufende oder teilweise umlaufende, Öffnung 150 ausgebildet, durch welche das Hilfsfluid 154 ins Innere der Innenschale 152 strömen kann, um dort die konvektive Strömung 142 auszubilden, welche das schadstoffvermindernde Medium 122 (in den Figuren 5 und 6 nicht dargestellt) aus dem Stutzen 114 austreibt und in das Strömungsrohr 116 befördert. Durch die in den Figuren 5 und 6 dargestellte Anordnung wird also erreicht, dass ein Teilstrom des Abgases als Hilfsfluid 154 in den Zwischenraum 148 zwischen der Innenschale 152 und dem Stutzen 114 geleitet wird. Durch die in die Strömung hineinragende Prallwand 146 der Innenschale 152 wird ein Staudruck an dem Einlauf 136 gebildet, welcher die Strömung des Hilfsfluids 154 vorantreibt. Dabei ist die Prallwand 146 bei dem Ausführungsbeispiel in Figur 6 zusätzlich entgegen der Hauptströmungsrichtung 118 des Abgases im Strömungsrohr 116 gebogen, so dass eine Erhöhung des Staudrucks bewirkt wird. Dieser Teilstrom des Abgases wird am oberen Ende der Innenschale 152 an der Mündungsstelle 140 ins Innere der Innenschale 152 umgelenkt. Diese Umlenkung kann optional zusätzlich dadurch verbessert werden, dass in diesem Bereich Umlenkelemente vorgesehen sind. In den in den Figuren 5 und 6 dargestellten Ausführungsbeispielen dient jeweils ein Schweißstutzen 158 mit zur Öffnung 150 hin abgeschrägten Kanten als Umlenkelement 156.

Das derart umgelenkte Abgas als Hilfsfluid 154 wird dadurch ins Innere der Innenschale 152 umgelenkt. Dadurch wird das Spray und/oder die Gasphase des schadstoffvermindernden Mediums 152 strömungsgeführt, das heißt die Sekundärströmung innerhalb des Stutzens 114 (Rezirkulation) wird durch das Ausblasen mittels des Hilfsfluids 154 kompensiert. Querkomponenten der Strömung in der Umgebung des Sprays werden reduziert. Hierdurch wird die Abscheidung an der Stutzenwand des Stutzens 114 beziehungsweise an der Innenseite der Innenschale 152 reduziert. Das Dosierventil 120 mündet dabei bei den in den Figuren 5 und 6 dargestellten Ausführungsbeispielen in ein Rohr 160, welches als Verlängerung eines Dosiermodulkonus 162 ausgebildet ist. Dieses Rohr 160 ragt ins Innere der Innenschale 152 hinein und ist von dem Schweißstutzen 158 umgeben. Auf diese Weise wird das schadstoffvermindernde Medium 152 unmittelbar in die konvektive Strömung 152 hineingesprüht. Hierdurch werden die oben genannten Vorteile weiter verbessert, das heißt die Ablagerungen an der Wand des Stutzens 114 und der Innenschale 152 werden weiter vermindert und die Austragung des Sprays und/oder gasförmigen schadstoffvermindernden Mediums 152 aus dem Stutzen 114 wird weiter verbessert.

Ein weiterer Vorteil der Verwendung der Innenschale 152 liegt darin, dass diese Innenschale sich durch Minimierung der wärmeübertragenden Kontakte (beispielsweise durch Verwendung minimal wärmeübertragender Schweißstellen, durch Verwendung von thermischen Isolationen oder ähnlichem) thermisch weitgehend von dem Stutzen 114 entkoppeln lässt. Auf diese Weise kann die Innenschale 152 auf erhöhter Temperatur gehalten werden, wohingegen der Stutzen 114 auf einer möglichst niedrigen Temperatur gehalten wird, um das Dosiermodul 112 thermisch zu entlasten.

Durch Auslegung der Spaltmaße, das heißt durch geeignete Auslegung des Einlaufs 136, der Dimensionierung des Zwischenraums 148 und der Dimensionierung der Öffnung 150 ist eine solche Anordnung optimal, bei welcher bei maximalen Betriebstemperaturen (das heißt beispielsweise bei einer Regeneration eines Dieselpartikelfilters) die Wandtemperatur im Bereich des Dosiermodul-Konus 162 und/oder des Rohres 220 °C (vorzugsweise 180 °C) nicht überschreitet, damit, bei Verwendung von Harnstofflösungen, die Bildung von Ablagerungen aus festen Folgeprodukten vermieden wird. Derartige Ablagerungen resultieren beispielsweise aus Harnstoffablagerungen, welche in der Regel nicht vollständig zu vermeiden sind. Bei zyklisch auftretenden Hochtemperaturen (beispielsweise wiederum bei einer Regeneration eines Dieselpartikelfilters) sollte hingegen die Wandtemperatur der Innenschale 152 innerhalb des Stutzens 114 zuverlässig oberhalb von 350 °C liegen, um dort eventuell entstandene Ablagerungen wieder abzubauen. Mittels der in den Figuren 5 und 6 dargestellten Ausführungsbeispiele, bei welchen die Innenschale 152 thermisch weitgehend von dem Stutzen 114 entkoppelt ist, sind diese Randbedingungen durch geeignete Dimensionierung des Zwischenraumes 148, des Einlaufs 136 und der Öffnung 150 gut erreichbar.

Das in Figur 6 dargestellte Ausführungsbeispiel der Innenschale 152 zeigt, im Vergleich zum Ausführungsbeispiel in Figur 5, dass die Spaltmaße des Zwischenraums 148 in weiten Bereichen variiert werden können. Bei dem Ausführungsbeispiel in Figur 6 wurde darauf geachtet, dass der stromaufwärts gelegene Zwischenraum 148 (das heißt die "kurze" Seite des Stutzens 114) mit einem dünneren Spaltmaß versehen wurde als die lange Seite des Stutzens 114. Hierdurch kann erreicht werden, dass heißes Abgas während einer längeren Zeit in Kontakt mit der kühlen Außenwand des Stutzens 114 steht, um so einen hohen thermischen Eintrag in das Dosiermodul 112 zu verhindern.

Die in den Figuren 3, 5 und 6 dargestellten Ausführungsbeispiele der Dosiervorrichtung 110 stellen nur einige der möglichen Ausführungsformen dar, bei welchen die Spülleitung 138 ganz oder teilweise in den Stutzen 114 der Dosiervorrichtung 110 integriert ist. Weiterhin stellen die Ausführungsbeispiele in den Figuren 5 und 6, bei welchen die "Prallwand" 146 zu einer Innenschale 152 erweitert wurde, welche die Innenwand des Stutzens ganz oder teilweise auskleidet, wobei auch Öffnungen in der Innenschale 152 vorgesehen sein können, lediglich Beispiele der möglichen Ausgestaltung dieser Innenschale 152 dar.

Bei den in den Figuren 2, 3, 5 und 6 dargestellten Ausführungsbeispielen wird als Hilfsfluid 154 das Abgas innerhalb des Strömungsrohrs 116 selbst verwendet. Dies muss jedoch nicht notwendigerweise der Fall sein. So kann als Hilfsfluid 154 auch ein von dem Abgas verschiedenes Trägermedium eingesetzt werden, beispielsweise Druckluft. Ein derartiges Ausführungsbeispiel ist in Figur 4 dargestellt. Hierbei ist eine Druckluftquelle 164 über eine Spülleitung 138 mit dem Stutzen 114 verbunden. Die Spülleitung 138 mündet wiederum im oberen Bereich des Stutzens 114, also nahe der Mündungsstelle des Dosiermoduls 112 in den Stutzen 114, in einer Mündungsstelle 150. Wiederum kann beispielsweise in der Spülleitung 138 ein Ventil 144 ausgebildet sein. Dieses Ventil kann, wie beispielsweise auch die Druckluftquelle 164, optional wiederum auch mit einer Steuerung verbunden werden, beispielsweise einer Steuerung, welche auch das Dosiermodul 112 beziehungsweise die Dosiervorrichtung 110 ansteuert. Die Spülung durch die Druckluft kann dabei beispielsweise kontinuierlich oder gepulst betrieben werden oder wiederum auch an Betriebszustände angepasst werden. Die Druckluft kann auch zur Kühlung des Dosierventils 120 verwendet werden. Die Druckluftquelle kann dabei verschiedenartig ausgestaltet sein und kann beispielsweise einen Kompressor umfassen, kann jedoch beispielsweise auch ohnehin in dem System verwendete Hochdruckkomponenten, wie beispielsweise Kompressoren, einsetzen. Beispielsweise kann Luft aus einem Frischluftsystem einer Brennkraftmaschine eingesetzt werden.

## Patentansprüche

1. Dosiervorrichtung (110) zum Einbringen eines schadstoffvermindernden Mediums (122) in ein durch ein Strömungsrohr (116), insbesondere eines Abgasstrangs einer Brennkraftmaschine, strömendes Abgas, insbesondere zum Einbringen eines Reduktionsmittels und/oder eines Reduktionsmittel-Vorläufers, umfassend ein Dosiermodul (112) zum Dosieren des schadstoffvermindernden Mediums (122), weiterhin umfassend einen das Dosiermodul (112) und das Strömungsrohr (116) verbindenden Stutzen (114), wobei die Dosiervorrichtung (110) eine Spülvorrichtung (134) aufweist, wobei die Spülvorrichtung (134) eingerichtet ist, um einen den Stutzen (114) zumindest teilweise in Richtung des Strömungsrohres (116) durchströmenden Hilfsstrom (142) eines Hilfsfluids (154) zu erzeugen, wobei das Hilfsfluid (154) über mindestens eine Spülleitung (138) dem Stutzen (114) zugeführt wird, **dadurch gekennzeichnet, dass** in dem Stutzen (114) eine Innenschale (152) aufgenommen ist, wobei die Spülleitung (138) zumindest teilweise in einem Zwischenraum (148) zwischen dem Stutzen (114) und der Innenschale (152) aufgenommen ist und/oder zumindest teilweise durch den Zwischenraum (148) zwischen dem Stutzen (114) und der Innenschale (152) gebildet wird.

2. Dosiervorrichtung (110) nach Anspruch 1, wobei die Spülleitung (138) zumindest teilweise separat von dem Stutzen (114) ausgebildet ist.

3. Dosiervorrichtung (110) nach einem der Ansprüche 1 oder 2, wobei die Spülleitung (138) zumindest teilweise in dem Stutzen (114) integriert ist.

4. Dosiervorrichtung (110) nach einem der vorhergehenden Ansprüche, wobei die Innenschale (152) an der stromaufwärtigen Seite des Stutzens (114) über den Stutzen (114) hinausragt und in das Strömungsrohr (116) hineinragt.

5. Dosiervorrichtung (110) nach einem der vorhergehenden Ansprüche, wobei die Innenschale (152) zumindest teilweise thermisch von dem Stutzen (114) entkoppelt ist.

6. Dosiervorrichtung (110) nach einem der vorhergehenden Ansprüche, wobei die Innenschale (152) derart ausgestaltet ist, dass das schadstoffvermindernde Medium (122) vollständig oder zumindest überwiegend durch das Innere der Innenschale (152) strömt.

7. Dosiervorrichtung (110) nach einem der vorhergehenden Ansprüche, wobei das Dosiermodul (112) mit einem Rohr (160) oder einem Ansatz verbunden ist, wobei das Rohr (160) oder der Ansatz in den Stutzen (114) hineinragen, wobei im Bereich der Mündung des Rohres (160) oder Ansatzes in den Stutzen (114) der Zwischenraum (148) eine Öffnung (150) aufweist, so dass das Hilfsfluid (154) aus dem Zwischenraum (148) in das Innere der Innenschale (152) einströmen und sich dort mit dem schadstoffvermindernden Medium (122) vermischen kann.

8. Dosiervorrichtung (110) nach einem der vorhergehenden Ansprüche, wobei die Innenschale (152) in das Strömungsrohr (116) hineinragt und das Strömungsrohr (116) zumindest in einem Abschnitt des Strömungsrohres (116) zumindest teilweise auskleidet, wobei zwischen der Innenschale (152) und dem Strömungsrohr (116) zumindest teilweise ein Zwischenraum (148) ausgebildet ist.

9. Dosiervorrichtung (110) nach einem der vorhergehenden Ansprüche, wobei der Stutzen (114) und/oder das Strömungsrohr (116) in dem Bereich des Zwischenraums (148) zumindest teilweise mit Rippen und/oder Noppen zur Verbesserung eines Wärmeübertrags versehen ist.

10. Dosiervorrichtung (110) nach einem der vorhergehenden Ansprüche, wobei die Spülleitung (138) mit dem Strömungsrohr (116) verbunden ist und einen Einlauf (136) hin zum Strömungsrohr (116) ausbildet, durch welchen Abgas in die Spülleitung (138) eindringen kann, wobei das Abgas von dem Einlauf (136) durch die Spülleitung (138) zu einer Mündungsstelle (140) innerhalb des Stutzens (114) strömen kann.

11. Dosiervorrichtung (110) nach Anspruch 10, wobei der Einlauf (136) derart ausgebildet ist, dass sich im Bereich des Einlaufs (136) ein Staudruck in dem Abgas ausbildet.

12. Dosiervorrichtung (110) nach einem der vorhergehenden Ansprüche, wobei in der Spülleitung (138) ein Ventil (144) zur Steuerung des Zustroms des Hilfsfluids (154) aufgenommen ist.

13. Dosiervorrichtung (110) nach Anspruch 12, weiterhin umfassend eine elektronische Steuerung zur Ansteuerung des Ventils (144), insbesondere zur getakteten Ansteuerung des Ventils (144) und/oder einer für eine an Betriebszustände einer Brennkraftmaschine angepassten Ansteuerung des Ventils (144).

14. Dosiervorrichtung (110) nach einem der vorhergehenden Ansprüche, wobei in dem Stutzen (114) und/oder dem Strömungsrohr (116) eine Innenschale (152) aufgenommen ist.

15. Dosiervorrichtung (110) nach einem der vorhergehenden Ansprüche, wobei das Hilfsfluid (154) mindestens eines der folgenden gasförmigen Medien umfasst: ein von dem Abgas verschiedenes Trägermedium, insbesondere Druckluft; einen Teil des Abgases; einen Teil des Abgases, welches aus einem Hochdruckteil des Abgasstrangs abgeführt wird; einen Teil des Abgases, welches aus dem Strömungsrohr (116), insbesondere dem Strömungsrohr (116) vor der Einmündung des Stutzens (114), abgeführt wird; Luft aus einem Frischluftsystem.

## Claims

1. Metering apparatus (110) for introducing a pollutant-reducing medium (122) into an exhaust gas which flows through a flow pipe (116), in particular an exhaust gas section of an internal combustion engine, in particular for introducing a reducing agent and/or a precursor of a reducing agent, comprising a metering module (112) for metering the pollutant-reducing medium (122), comprising, furthermore, a stub (114) which connects the metering module (112) and the flow pipe (116), the metering apparatus (110) having a flushing apparatus (134), the flushing apparatus (134) being set up to generate an auxiliary flow (142) of an auxiliary fluid (154), which auxiliary flow (142) flows through the stub (114) at least partially in the direction of the flow pipe (116), the auxiliary fluid (154) being fed to the stub (114) by means of at least one flushing line (138), **characterized in that** an inner shell (152) is received in the stub (114), the flushing line (138) being received at least partially in an intermediate space (148) between the stub (114) and the inner shell (152) and/or being formed at least partially by the intermediate space (148) between the stub (114) and the inner shell (152).

2. Metering apparatus (110) according to Claim 1, the flushing line (138) being configured at least partially separately from the stub (114).

3. Metering apparatus (110) according to either of Claims 1 and 2, the flushing line (138) being integrated at least partially into the stub (114).

4. Metering apparatus (110) according to one of the preceding claims, the inner shell (152) protruding beyond the stub (114) on the upstream side of the stub (114) and protruding into the flow pipe (116).

5. Metering apparatus (110) according to one of the preceding claims, the inner shell (152) being at least partially decoupled thermally from the stub (114).

6. Metering apparatus (110) according to one of the preceding claims, the inner shell (152) being configured in such a way that the pollutant-reducing medium (122) flows completely or at least predominantly through the interior of the inner shell (152).

7. Metering apparatus (110) according to one of the preceding claims, the metering module (112) being connected to a pipe (160) or an attachment, the pipe (160) or the attachment protruding into the stub (114), the intermediate space (148) having an opening (150) in the region of the orifice of the pipe (160) or attachment into the stub (114), with the result that the auxiliary fluid (154) can flow out of the intermediate space (148) into the interior of the inner shell (152) and can mix there with the pollutant-reducing medium (122).

8. Metering apparatus (110) according to one of the preceding claims, the inner shell (152) protruding into the flow pipe (116) and at least partially lining the flow pipe (116) at least in a section of the flow pipe (116), an intermediate space (148) being configured at least partially between the inner shell (152) and the flow pipe (116).

9. Metering apparatus (110) according to one of the preceding claims, the stub (114) and/or the flow pipe (116) being provided in the region of the intermediate space (148) at least partially with fins and/or pimples in order to improve a transfer of heat.

10. Metering apparatus (110) according to one of the preceding claims, the flushing line (138) being connected to the flow pipe (116) and forming an inlet (136) towards the flow pipe (116), through which inlet (136) exhaust gas can penetrate into the flushing line (138), it being possible for the exhaust gas to flow from the inlet (136) through the flushing line (138) to an orifice point (140) within the stub (114).

11. Metering apparatus (110) according to Claim 10, the inlet (136) being configured in such a way that a back pressure is formed in the exhaust gas in the region of the inlet (136).

12. Metering apparatus (110) according to one of the preceding claims, a valve (144) for controlling the inflow of the auxiliary fluid (154) being received in the flushing line (138).

13. Metering apparatus (110) according to Claim 12, comprising, furthermore, an electronic controller for actuating the valve (144), in particular for cyclically actuating the valve (144) and/or actuating the valve (144) in a manner which is adapted to operating states of an internal combustion engine.

14. Metering apparatus (110) according to one of the preceding claims, an inner shell (152) being received in the stub (114) and/or the flow pipe (116).

15. Metering apparatus (110) according to one of the preceding claims, the auxiliary fluid (154) comprising at least one of the following gaseous media: a carrier medium which is different from the exhaust gas, in particular compressed air; part of the exhaust gas; part of the exhaust gas which is discharged from a high-pressure part of the exhaust gas section; part of the exhaust gas which is discharged from the flow pipe (116), in particular the flow pipe (116) upstream of the orifice of the stub (114); air from a fresh air system.

## Revendications

1. Ensemble de dosage (110) permettant d'apporter un fluide (122) diminuant la teneur en toxiques dans des gaz d'échappement qui s'écoulent dans un tube d'écoulement (116), en particulier du conduit de gaz d'échappement d'un moteur à combustion interne, en particulier pour apporter un agent réducteur et/ou un précurseur d'agent réducteur, et comprenant
un module de dosage (112) qui dose le fluide (122) diminuant la teneur en toxique et en outre une tubulure (114) qui relie le module de dosage (112) et le tube d'écoulement (116),
l'ensemble de dosage (110) présentant un ensemble de rinçage (134),
l'ensemble de rinçage (134) étant conçu pour former un écoulement auxiliaire (142) de fluide auxiliaire (154) qui traverse la tubulure (114) au moins en partie en direction du tube d'écoulement (116),
le fluide auxiliaire (154) étant apporté à la tubulure (114) au moyen d'un conduit de rinçage (138), **caractérisé en ce que**
une coquille intérieure (152) est reprise dans la tubulure (114),
**en ce que** le conduit de rinçage (138) est repris au moins en partie dans l'espace intermédiaire (148) entre la tubulure (114) et la coquille intérieure (152) et/ou est formé au moins en partie par l'espace intermédiaire (148) entre la tubulure (114) et la coquille intérieure (152).

2. Ensemble de dosage (110) selon la revendication 1, dans lequel le conduit de rinçage (138) est formé au moins en partie séparément de la tubulure (114).

3. Ensemble de dosage (110) selon l'une des revendications 1 ou 2, dans lequel le conduit de rinçage (138) est intégré au moins en partie dans la tubulure (114).

4. Ensemble de dosage (110) selon l'une des revendications précédentes, dans lequel la coquille intérieure (152) déborde au-delà de la tubulure (114) du côté de la tubulure (114) située en amont et pénètre dans le tube d'écoulement (116).

5. Ensemble de dosage (110) selon l'une des revendications précédentes, dans lequel la coquille intérieure (152) est découplée thermiquement au moins en partie de la tubulure (114).

6. Ensemble de dosage (110) selon l'une des revendications précédentes, dans lequel la coquille intérieure (152) est configurée de telle sorte que le fluide (122) diminuant la teneur en toxique s'écoule entièrement ou au moins largement à l'intérieur de la coquille intérieure (152).

7. Ensemble de dosage (110) selon l'une des revendications précédentes, dans lequel le module de dosage (112) est raccordé à un tube (160) ou à un appendice, le tube (160) ou l'appendice pénétrant dans la tubulure (114), l'espace intermédiaire (148) présentant une ouverture (150) au niveau de l'embouchure du tube (160) ou de l'appendice dans la tubulure (114), de telle sorte que le fluide auxiliaire (154) provenant de l'espace intermédiaire (148) puisse pénétrer à l'intérieur de la coquille intérieure (152) pour s'y mélanger avec le fluide (122) diminuant la teneur en toxique.

8. Ensemble de dosage (110) selon l'une des revendications précédentes, dans lequel la coquille intérieure (152) pénètre dans le tube d'écoulement (116) et recouvre le tube d'écoulement (116) au moins en partie dans au moins une partie du tube d'écoulement (116), un espace intermédiaire (148) étant formé au moins en partie entre la coquille intérieure (152) et le tube d'écoulement (116).

9. Ensemble de dosage (110) selon l'une des revendications précédentes, dans lequel la tubulure (114) et/ou le tube d'écoulement (116) sont dotés au niveau de l'espace intermédiaire (148) au moins en partie de nervures et/ou de reliefs en vue d'améliorer la transmission de chaleur.

10. Ensemble de dosage (110) selon l'une des revendications précédentes, dans lequel le conduit de rinçage (138) est raccordé au tube d'écoulement (116) et forme une admission (136) en direction du tube d'écoulement (116), par laquelle les gaz d'échappement peuvent pénétrer dans le conduit de rinçage (138), les gaz d'échappement pouvant s'écouler dans le conduit de rinçage (138) depuis l'admission (136) et en direction d'une embouchure (140) dans la tubulure (114).

11. Ensemble de dosage (110) selon la revendication 10, dans lequel l'admission (136) est configurée de telle sorte qu'une pression d'accumulation s'établisse dans les gaz d'échappement au niveau de l'admission (136).

12. Ensemble de dosage (110) selon l'une des revendications précédentes, dans lequel une soupape (144) de commande de l'apport de fluide auxiliaire (154) est reprise dans le conduit de rinçage (138).

13. Ensemble de dosage (110) selon la revendication 12, comprenant en outre une commande électronique pour la commande de la soupape (144), en particulier pour la commande cadencée de la soupape (144) et/ou pour une commande de la soupape (144) adaptée aux états de fonctionnement du moteur à combustion interne.

14. Ensemble de dosage (110) selon l'une des revendications précédentes, dans lequel une coquille intérieure (152) est reprise dans la tubulure (114) et/ou dans le tube d'écoulement (116).

15. Ensemble de dosage (110) selon l'une des revendications précédentes, dans lequel le fluide auxiliaire (154) comporte au moins l'un des fluides gazeux suivants : un fluide porteur différent des gaz d'échappement, en particulier de l'air comprimé; une partie des gaz d'échappement; une partie des gaz d'échappement extraite d'une partie à haute pression du conduit d'échappement; une partie des gaz d'échappement extraite du tube d'écoulement (116), en particulier du tube d'écoulement (116) en amont de l'endroit où débouche la tubulure (114) et de l'air provenant d'un système d'air frais.
